# DEMANDE DE BREVET EUROPEEN

(11) **EP 4 339 696 A1**
(43) Date de publication de la demande: **20.03.2024**
(21) Numéro de dépôt: 23306448.4
(22) Date de dépôt: 31.08.2023
(51) Int. Cl.: G02C 9/04

(54) **ARTICLE DE LUNETTERIE COMPORTANT UN ASSEMBLAGE MAGNÉTIQUE**

(30) Priorité: 12.09.2022 FR 2209144
(71) Demandeur: Magnet'ik Lunettes, 39400 Morbier (FR)
(72) Inventeur: MARADAN, Jean-Charles, 39400 MORBIER (FR); JACQUEMIN-VERGUET, Didier, 39400 La MOUILLE (FR)
(74) Mandataire: Novagraaf Technologies

(57) **Abrégé**

La présente invention a pour objet un article de lunetterie (10) comportant :
- une armature (12) munie d'un pont (20) qui relie un premier encadrement (22) et un second encadrement (24),
- un premier châssis (26) et un second châssis (28) qui sont prévus pour être emboîtés respectivement dans le premier et le second encadrements (22, 24),
- un premier verre (30) et un second verre (32) qui sont prévus pour être montés respectivement dans le premier et le second châssis (26, 28), caractérisé en ce que le premier châssis (26) comporte un premier élément d'attraction magnétique qui est apte à coopérer par attraction magnétique avec un second élément d'attraction magnétique porté par le second châssis (28), et en ce que chaque châssis (26, 28) comporte un premier organe d'emboîtement élastique qui est prévu pour s'emboîter avec un second organe d'emboîtement élastique qui est agencé sur l'encadrement (22, 24) associé.

## Description

### Domaine technique de l'invention

La présente invention concerne un article de lunetterie.

L'invention concerne plus particulièrement un article de lunetterie tel qu'une paire de lunettes de vue ou solaires comportant des éléments interchangeables.

### Arrière-plan technique

Une paire de lunettes comporte généralement une armature qui reçoit deux verres montés à force chacun dans une gorge formée dans un encadrement associé. Pour permettre de changer l'apparence de la paire de lunettes plus facilement, il a déjà été proposé de monter les verres dans un châssis intermédiaire fixé de manière amovible sur l'armature, par exemple par emboîtement ou au moyen d'un élément d'attraction magnétique.

Les solutions existantes ne donnent pas entièrement satisfaction. C'est pourquoi il est nécessaire de proposer des améliorations.

### Résumé de l'invention

L'invention propose un article de lunetterie comportant :
- une armature munie d'un pont qui relie un premier encadrement et un second encadrement,
- un premier châssis et un second châssis qui sont prévus pour être emboîtés respectivement dans le premier et le second encadrements,
- un premier verre et un second verre qui sont prévus pour être montés respectivement dans le premier et le second châssis,
caractérisé en ce que le premier châssis comporte un premier élément d'attraction magnétique qui est apte à coopérer par attraction magnétique avec un second élément d'attraction magnétique porté par le second châssis, et en ce que chaque châssis comporte un premier organe d'emboîtement élastique qui est agencé sur un tronçon du châssis opposé à l'élément d'attraction magnétique associé et qui est prévu pour s'emboîter avec un second organe d'emboîtement élastique qui est agencé sur l'encadrement associé.

L'article de lunetterie selon l'invention permet de faciliter la modification de l'apparence d'une paire de lunettes en permettant un changement rapide, sûr, et facile des châssis et/ou de l'armature. Un tel article de lunetterie offre de nombreuses possibilités de personnalisation et une grande liberté de dessins et de formes.

Un tel article de lunetterie est plus facile à fabriquer et plus économique.

Selon d'autres caractéristiques de l'invention :
- chaque élément d'attraction magnétique est agencé dans une protubérance formée sur le châssis associé ;
- chaque protubérance comporte une portion d'extrémité libre parallélépipédique qui s'étend transversalement depuis un bord du châssis associé ;
- chaque portion d'extrémité libre comporte un logement ouvert du côté opposé au châssis associé, l'élément d'attraction magnétique associé étant reçu dans ledit logement ;
- le pont comporte une échancrure qui est conformée pour recevoir les deux protubérances de manière complémentaire et les retenir sur l'armature, ladite échancrure étant ouverte sur une face dite arrière de l'armature, de manière à permettre une insertion des protubérances dans l'échancrure par l'arrière de l'armature ;
- l'échancrure comporte une paroi transversale supérieure et une paroi transversale inférieure qui retiennent les deux protubérances respectivement vers le haut et vers le bas, lorsqu'elles sont montées dans l'échancrure ;
- le fond de l'échancrure comporte un évidement qui est délimité transversalement par deux surfaces inclinées, et chaque protubérance comporte une portion de surface inclinée complémentaire de la surface inclinée associée de l'évidement ;
- les organes d'emboîtement élastique comportent au moins une nervure et une rainure qui s'étendent le long d'un bord du châssis associé et le long d'un bord de l'encadrement associé ;
- l'armature comporte à chaque extrémité transversale une mortaise qui est prévue pour recevoir un tenon métallique complémentaire agencé à l'extrémité pivotante d'une branche, et un organe d'attraction magnétique est reçu dans le fond de la mortaise de manière à retenir le tenon métallique dans la mortaise à la fois en position déployée et en position repliée, chaque branche étant prévue pour pivoter entre sa position déployée et sa position repliée autour d'un axe de pivotement sensiblement parallèle au plan général de l'armature ;
- chaque organe d'attraction magnétique comporte une surface principale d'attraction plane et orientée vers le tenon, et le tenon métallique associé comporte une surface d'appui primaire qui est en appui plan contre la surface principale d'attraction, lorsque la branche associée occupe sa position déployée, et une surface d'appui secondaire qui est inclinée par rapport à la surface d'appui primaire et qui est en appui plan contre la surface principale d'attraction, lorsque la branche associée occupe sa position repliée ;
- la surface d'appui primaire se prolonge, du côté opposé à la surface d'appui secondaire, par une surface cylindrique primaire et/ou la surface d'appui secondaire se prolonge, du côté opposé à la surface d'appui primaire, par une surface cylindrique secondaire, l'axe de chaque surface cylindrique correspondant à l'axe de pivotement de la branche associée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue en perspective qui représente schématiquement un article de lunetterie selon un premier mode de réalisation de l'invention lorsque ses branches sont en position déployée et que des verres montés dans des châssis amovibles sont emboîtés dans des encadrements formés dans l'armature de l'article de lunetterie ;
[Fig.2] est une vue similaire à celle de la figure 1 qui représente l'article de lunetterie lorsque ses branches sont en position repliée ;
[Fig.3] est une vue en perspective similaire à celle de la figure 1 qui représente l'armature avant le montage d'un premier et second châssis portant les verres ;
[Fig.4] est une vue en perspective agrandie de l'article de lunetterie de la figure 1 illustrant le positionnement du premier châssis vis-à-vis de l'encadrement associé avant montage, et avant le montage du second châssis ;
[Fig.5] est une vue en perspective qui représente l'armature de l'article de lunetterie après le montage du premier châssis et avec le second châssis en cours de montage représenté en traits fantôme ;
[Fig.6] est une vue en perspective qui représente l'article de lunetterie au cours du montage d'une première branche, l'encadrement associé étant représenté en traits fantômes pour laisser apparaître l'organe d'attraction magnétique prévu pour coopérer avec un tenon métallique sur la branche ;
[Fig.7] est une vue en perspective qui représente schématiquement l'assemblage d'une branche sur l'armature, la branche étant représentée partiellement en position déployée et en appui contre l'organe d'attraction magnétique ;
[Fig.8] est une vue similaire à celle de la figure 7 qui illustre une étape intermédiaire lors du pivotement de la branche depuis sa position déployée vers sa position repliée ;
[Fig.9] est une vue similaire à celle de la figure 7 qui illustre l'assemblage de la branche sur l'armature lorsqu'elle occupe sa position repliée ;
[Fig.10] est une vue similaire à celle de la figure 3 qui représente schématiquement un second mode de réalisation de l'invention dans lequel les moyens permettant l'emboîtement des châssis sur l'armature sont différents du premier mode de réalisation ;
[Fig. 11] est une vue de face qui représente l'article de lunetterie 10 de la figure 1.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal. Par convention, l'axe longitudinal L est orienté de l'arrière vers l'avant.

Dans la description qui va suivre, des éléments identiques, similaires ou analogues seront désignés par les mêmes chiffres de référence.

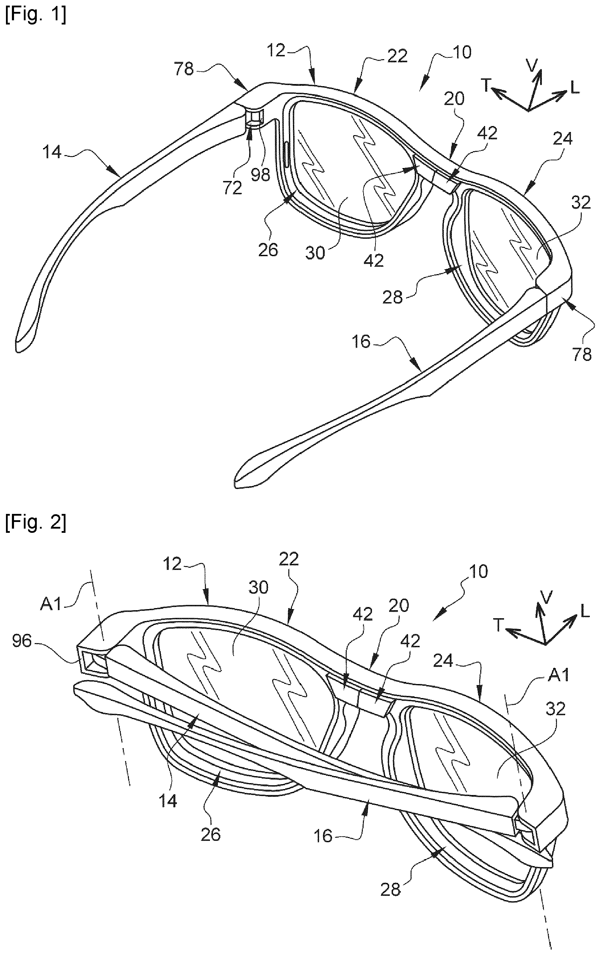

Les figures 1 et 2 illustrent un premier mode de réalisation d'un article de lunetterie 10 selon l'invention comportant une armature 12 équipée de deux branches 14, 16 pivotantes.

On note que, par convention, l'orientation longitudinale correspond ici à une orientation selon une direction sensiblement perpendiculaire au plan général de l'armature 12. Les branches 14, 16 sont agencées à l'arrière de l'armature 12.

Sur la figure 1, l'article de lunetterie 10 est représenté dans une configuration dite déployée, c'est-à-dire avec les branches 14, 16 s'étendant globalement selon des directions longitudinales permettant à un utilisateur de porter l'article de lunetterie 10 sur son nez. Sur la figure 2, l'article de lunetterie 10 est représenté dans une configuration dite repliée, c'est-à-dire avec les branches 14, 16 repliées vers la face arrière 18 de l'armature 12.

L'armature 12 est munie d'un pont 20 qui relie un premier encadrement 22 et un second encadrement 24. Selon le mode de réalisation représenté, l'armature 12 est réalisée d'une seule pièce avec le pont 20, par exemple par injection plastique dans un moule ou par un processus d'impression en trois dimensions.

L'article de lunetterie 10 comporte un premier châssis 26 et un second châssis 28 qui sont prévus pour être emboîtés respectivement dans le premier et le second encadrements 22, 24. Un premier verre 30 et un second verre 32 sont montés respectivement dans le premier et le second châssis 26, 28.

Les verres 30, 32 peuvent être notamment des verres ophtalmiques pour la correction de la vue de l'utilisateur et/ou des verres solaires servant à protéger les yeux de l'utilisateur des rayons du soleil. On désigne par verres 30, 32 des éléments qui peuvent être réalisés en verre ou dans un autre matériau apte à une utilisation en lunetterie, notamment dans un matériau plastique tel qu'utilisé régulièrement pour réaliser des verres correcteurs ou des verres solaires.

Les verres 30, 32 sont retenus sur chaque châssis 26, 28 par un montage du type à drageoir ou par un autre type de montage.

Conformément aux enseignements de l'invention, le premier châssis 26 comporte un premier élément d'attraction magnétique 34 qui est apte à coopérer par attraction magnétique avec un second élément d'attraction magnétique 36 porté par le second châssis 28. Les éléments d'attraction magnétique 34, 36 sont par exemple des aimants.

De plus, chaque châssis 26, 28 comporte un premier organe d'emboîtement élastique 38 qui est agencé sur un tronçon du châssis 26, 28 opposé, transversalement, à l'élément d'attraction magnétique associé 34, 36 et qui est prévu pour s'emboîter avec un second organe d'emboîtement élastique 40 qui est agencé sur l'encadrement 22, 24 associé.

Conformément au mode de réalisation représenté, chaque élément d'attraction magnétique 34, 36 est agencé dans une protubérance 42 formée sur le châssis 26, 28 associé. La protubérance 42 comporte une portion d'extrémité libre 44 parallélépipédique qui s'étend transversalement depuis un bord 46 du châssis 26, 28 associé.

Chaque portion d'extrémité libre 44 comporte un logement 48 ouvert du côté opposé au châssis 26, 28 associé. L'élément d'attraction magnétique 34, 36 associé est reçu dans ledit logement 48. Il peut être inséré à force dans le logement 48, ou surmoulé avec le châssis 26, 28 et la portion d'extrémité libre 44.

On note que, lorsque les châssis 26, 28 sont en position montée dans les encadrements 22, 24 associés, les ouvertures des deux logements 48 se font face et permettent l'exercice d'une force d'attraction magnétique entre les deux châssis 26, 28 grâce aux éléments d'attraction magnétique 26, 28 contenus dans les deux logements 48. En position montée, la face apparente 50 de chaque élément d'attraction magnétique 26, 28 peut être en contact avec l'autre face apparente 50, ou très proche, de manière à assurer une force d'attraction magnétique suffisante pour permettre un assemblage robuste des châssis 26, 28 dans les encadrements 22, 24.

Avantageusement, le pont 20 de l'armature 12 comporte une échancrure 52 qui est conformée pour recevoir les deux protubérances 42 de manière complémentaire et les retenir sur l'armature 12. Cette échancrure 52 est ouverte sur la face arrière 18 de l'armature 12, de manière à permettre une insertion des protubérances 42 dans l'échancrure 52 longitudinalement par l'arrière.

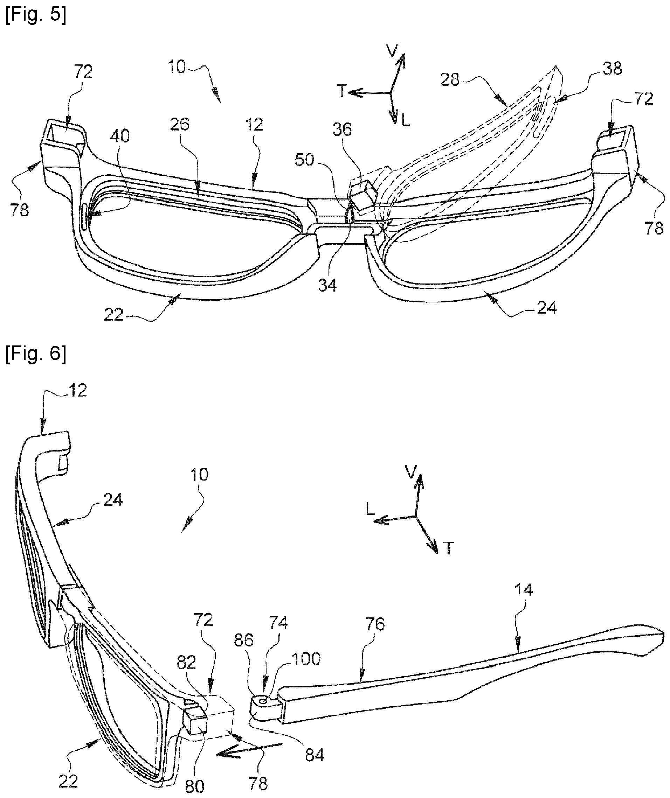

La figure 5 montre une étape intermédiaire de montage, ou démontage, du second châssis 28 dans l'armature 12. On note que le mouvement d'insertion de la protubérance 42 précède l'emboîtement au moyen des organes d'emboîtement élastique 38, 40, ce qui nécessite une inclinaison du plan général du second châssis 28, la partie comportant le premier organe d'emboîtement élastique 38 restant en arrière par rapport à la protubérance 52.

Avantageusement, l'échancrure 52 comporte une paroi transversale supérieure 54 et une paroi transversale inférieure 56 qui retiennent les deux protubérances 42 respectivement vers le haut et vers le bas, lorsqu'elles sont montées dans l'échancrure 52, comme sur les figures 1 et 2.

Le fond de l'échancrure 52 comporte ici un évidement 58 qui est délimité transversalement par deux surfaces inclinées 60, 62 opposées. Chaque protubérance 42 comporte une portion de surface inclinée 64 complémentaire de la surface inclinée 60, 62 associée de l'évidement 58.

Selon le mode de réalisation représenté, le premier organe d'emboîtement élastique 38 est constitué par une nervure 66 qui s'étend le long du bord 46 du châssis 26, 28. Le second organe d'emboîtement élastique 40 est constitué ici par une rainure 68 complémentaire, aménagée dans l'épaisseur du bord de l'encadrement associé 22, 24 et apte à recevoir par emboîtement la nervure 66 associée de manière à retenir chaque châssis 26, 28 dans son encadrement 22, 24, une fois la protubérance 42 correspondante reçue dans l'échancrure 52.

Avantageusement, chaque châssis 26, 28 comporte une moulure 70 agencée sur le bord 46, au niveau de la nervure 66 mais sur la face opposée. Cette moulure 70 est prévue pour former une zone d'appui élargie pour l'utilisateur lorsqu'il manipule le châssis 26, 28 et qu'il l'enclenche dans l'encadrement 22, 24 associé.

Chaque châssis 26, 28 possède une forme extérieure ajustée complémentaire du réceptacle formé par le rebord de chaque encadrement 22, 24 ce qui permet un emboîtement efficace de chaque châssis 26, 28 dans l'encadrement 22, 24 associé. La granulosité de la matière formant les châssis 26, 28 et les encadrements 22, 24 peut être choisie de manière à assurer un bon maintien des châssis 26, 28 dans les encadrements 22, 24.

On décrit maintenant le procédé de montage des châssis 26, 28 dans les encadrements 22, 24 de l'armature 12.

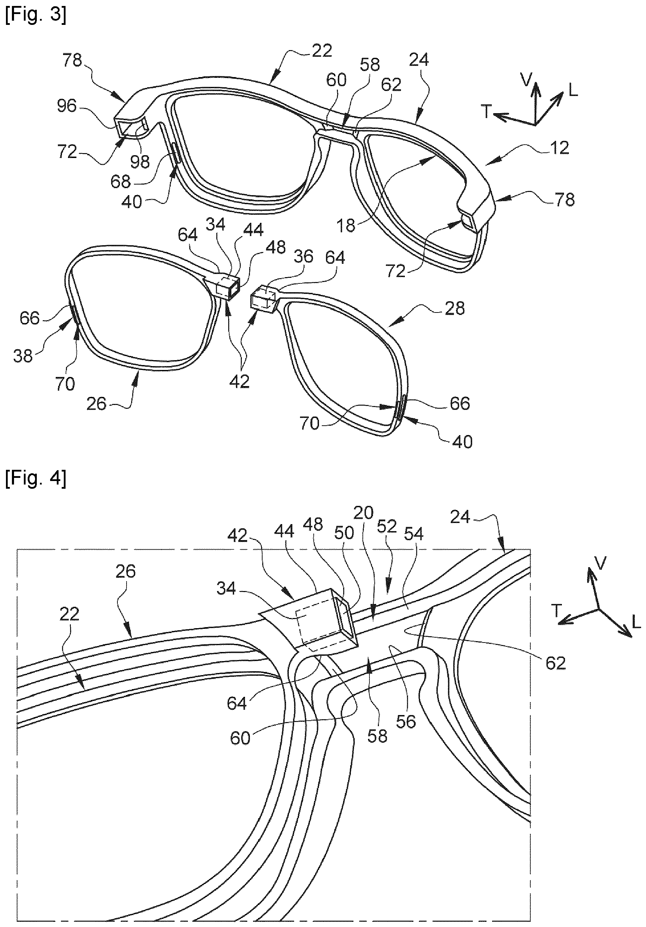

En considérant la figure 3, l'utilisateur saisit l'un des châssis, par exemple le premier châssis 26, et l'incline de manière à pouvoir insérer en premier lieu la protubérance 42 dans la partie gauche de l'échancrure 52. L'utilisateur poursuit l'opération en appuyant sur le premier châssis 26 au niveau de la moulure 70 de manière à pouvoir pousser la nervure 66 jusqu'à ce qu'elle s'enclenche dans la rainure 68 associée du premier encadrement 22.

La nervure 66 et la rainure 68 sont configurées de manière à provoquer un déclic à la fin de l'emboîtement, c'est-à-dire un signal sonore ou « clic » permettant de confirmer à l'utilisateur le bon emboîtement du premier châssis 26 dans le premier encadrement 22.

En considérant maintenant la figure 5, où le premier châssis 26 est représenté emboîté dans le premier encadrement 22, l'utilisateur saisit le second châssis 28 et vient positionner la protubérance 42 dans la partie restante de l'échancrure 52. En approchant la protubérance 42 du second châssis 28 de la protubérance 42 du premier châssis 26, une attraction magnétique se produit entre le premier élément d'attraction magnétique 34 et le second élément d'attraction magnétique 36. Cette attraction magnétique tend à attirer le second châssis 28 dans sa position montée et lui permet en quelque sorte de s'autopositionner. L'assemblage du second châssis 28 sur l'armature 12 s'en trouve facilité puisqu'il ne reste plus qu'à l'utilisateur à pousser sur le second châssis 28, de préférence au niveau de la moulure 70, pour provoquer l'emboîtement complet du second châssis 28 dans le second encadrement 24.

Ainsi, l'invention permet un assemblage facile et robuste des châssis 26, 28 sur l'armature 12. Le démontage est également très facile puisqu'il suffit de tirer d'un côté du châssis 26, 28 pour le déboîter, par exemple du côté de la protubérance 42.

La facilité de montage et de démontage des châssis 26, 28 permet de prévoir plusieurs châssis 26, 28 pour la même armature 12, ou plusieurs armatures 12 pour les mêmes châssis 26, 28, par exemple avec différentes couleurs ou différents modèles de verre. Il y a donc une grande étendue de possibilités de personnalisation de l'article de lunetterie 10.

On décrit maintenant une solution d'assemblage des branches 14, 16 sur l'armature 12, en considérant notamment les figures 6 à 9. L'armature 12 comporte ici à chaque extrémité transversale une mortaise 72 qui est prévue pour recevoir un tenon métallique 74 complémentaire agencé à l'extrémité pivotante d'une des branches 14, 16. Le tenon métallique 74 est par exemple surmoulé dans le corps principal 76 de la branche 14, 16 associée.

Chaque mortaise 72 est ici agencée dans un pavé 78 formé à l'extrémité transversale supérieure de l'armature 12. Chaque mortaise 72 comprend ici un logement sensiblement parallélépipédique qui est ouvert du côté arrière, c'est-à-dire du côté de la branche 14, 16, et au fond duquel est agencé un organe d'attraction magnétique 80 apte à retenir le tenon métallique 74 dans la mortaise 72, à la fois en position déployée et en position repliée de la branche associée 14, 16.

Avantageusement, l'organe d'attraction magnétique 80 comporte une surface principale d'attraction 82 plane et orientée vers le tenon métallique 74. Selon le mode de réalisation représenté ici, l'organe d'attraction magnétique 80 se présente sous la forme d'un cube, ou parallélépipède, en matériau magnétique du type aimant. Il peut être surmoulé dans le pavé 78 formé d'une seule pièce avec l'armature 12.

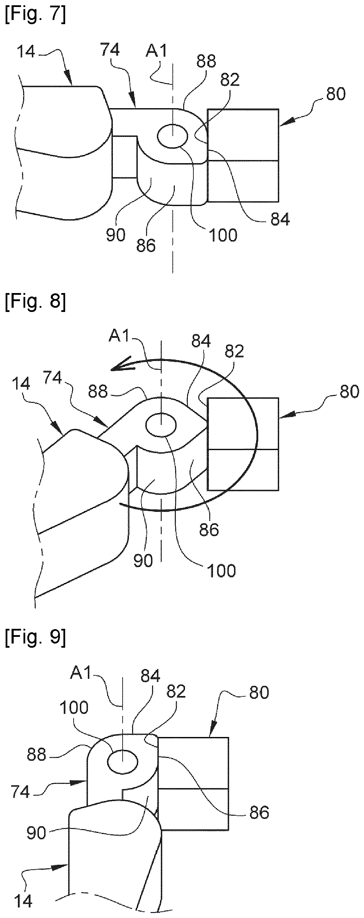

Chaque tenon métallique 74 comporte une surface d'appui primaire 84 qui est en appui plan contre la surface principale d'attraction 82, lorsque la branche 14, 16 associée occupe sa position déployée, tel qu'illustré par la figure 7, et une surface d'appui secondaire 86 qui est sensiblement perpendiculaire à la surface d'appui primaire 84. La surface d'appui secondaire 86 est en appui plan contre la surface principale d'attraction 82 lorsque la branche 14, 16 associée occupe sa position repliée, comme illustré par la figure 9.

Selon des variantes de réalisation (non représentées), la surface d'appui primaire 84 et la surface d'appui secondaire 86 pourraient former entre elles un angle différent de 90 degrés, par exemple compris entre 60 et 90 degrés.

Avantageusement, la surface d'appui primaire 84 se prolonge, du côté opposé à la surface d'appui secondaire 86, par une surface cylindrique primaire 88, et la surface d'appui secondaire 86 se prolonge, du côté opposé à la surface d'appui primaire 84, par une surface cylindrique secondaire 90. L'axe A1 de chaque surface cylindrique correspondant à l'axe de pivotement de la branche 14, 16 associée. Les surfaces cylindriques 88, 90 permettent de faciliter le pivotement et le guidage des tenons métalliques 74 à l'intérieur des mortaises 72 associées, lorsque chaque branche 14, 16 pivote entre sa position déployée et sa position repliée. Le mouvement de pivotement depuis la position déployée vers la position repliée est illustré par la figure 8 qui représente un état intermédiaire de l'articulation formée par le tenon métallique 74 et l'organe d'attraction magnétique 80, entre la position déployée et la position repliée.

Avantageusement, un premier rebord vertical 96 de la mortaise 72 forme une surface de butée en ouverture pour le tenon métallique 74, dans la position déployée de la branche 14, 16 associée, et un second rebord vertical 98 de la mortaise 72 forme une surface de butée en fermeture pour le tenon métallique 74, dans la position repliée de la branche 14, 16 associée.

Le système d'assemblage des branches 14, 16 permet de faciliter le changement des branches, ce qui permet aussi de nombreuses personnalisations en remplaçant les branches 14, 16, ou l'armature 12, avec des modèles de couleurs ou formes différentes.

Avantageusement, le tenon métallique 74 peut être muni d'un perçage 100 suivant l'axe de pivotement A1 ce qui permet d'alléger la pièce.

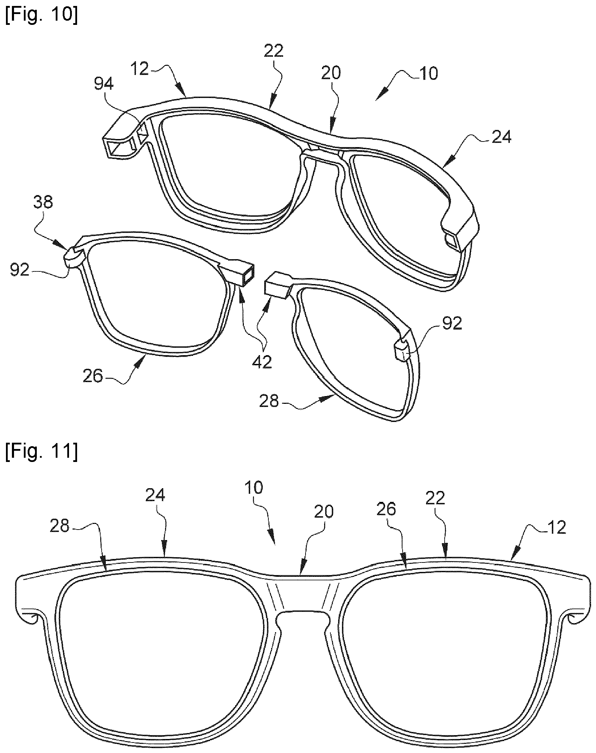

Sur la figure 10 on a représenté un second mode de réalisation de l'invention. Celui-ci se distingue du premier mode par les organes d'emboîtement 38, 40. En effet, le premier organe d'emboîtement 38 porté par le châssis 26, 28 se présente ici sous la forme d'un ergot 92 qui est agencé transversalement du côté opposé à la protubérance 42 associée et qui vient s'emboîter dans une cavité d'emboîtement 94 formée en vis-à-vis dans l'armature 12.

Selon le mode de réalisation représenté, la cavité d'emboîtement 94 est aménagée dans le pavé 78, sur le côté et en avant de la mortaise 72 associée.

Sur la figure 11 on a représenté une vue de face de l'article de lunetterie 10 selon l'invention. On note sur cette vue que l'emboîtement des châssis 26, 28 dans les encadrements 22, 24 de l'armature 12 est prévu pour laisser apparaître, à l'avant de l'armature 12, le contour intérieur des châssis 26, 28. Cela produit un effet esthétique pour un utilisateur qui peut par exemple faire des choix sur la combinaison de coloris entre les châssis 26, 28 et les encadrements 22, 24. En choisissant des couleurs différentes, il fait ainsi apparaître en face avant un liséré de la couleur des châssis 26, 28 qui contraste avec la couleur de l'armature 12.

### LEGENDE

10 : article de lunetterie
12 : armature
14, 16 : branches
18 : face arrière de l'armature
20 : pont
22 : premier encadrement
24 : second encadrement
26 : premier châssis
28 : second châssis
30 : premier verre
32 : second verre
34 : premier élément d'attraction magnétique
36 : second élément d'attraction magnétique
38 : premier organe d'emboîtement
40 : second organe d'emboîtement
42 : protubérance
44 : portion d'extrémité libre
46 : bord
48 : logement
50 : face apparente
52 : échancrure
54 : paroi transversale supérieure
56 : paroi transversale inférieure
58 : évidement
60, 62 : surfaces inclinées
64 : portion de surface inclinée
66 : nervure
68 : rainure
70 : moulure
72 : mortaise
74 : tenon métallique
76 : corps principal
78 : pavé
80 : organe d'attraction magnétique
82 : surface d'attraction plane
84 : surface d'appui primaire
86 : surface d'appui secondaire
88 : surface cylindrique primaire
90 : surface cylindrique secondaire
92 : ergot
94 : cavité d'emboîtement
96 : premier rebord vertical
98 : second rebord vertical
A1 : axe de pivotement

## Revendications

1. Article de lunetterie (10) comportant :
- une armature (12) munie d'un pont (20) qui relie un premier encadrement (22) et un second encadrement (24),
- un premier châssis (26) et un second châssis (28) qui sont prévus pour être emboîtés respectivement dans le premier et le second encadrements (22, 24),
- un premier verre (30) et un second verre (32) qui sont prévus pour être montés respectivement dans le premier et le second châssis (26, 28),
**caractérisé en ce que** le premier châssis (26) comporte un premier élément d'attraction magnétique (34) qui est apte à coopérer par attraction magnétique avec un second élément d'attraction magnétique (36) porté par le second châssis (28), et **en ce que** chaque châssis (26, 28) comporte un premier organe d'emboîtement élastique (38) qui est agencé sur un tronçon du châssis (26, 28) opposé à l'élément d'attraction magnétique (34, 36) associé et qui est prévu pour s'emboîter avec un second organe d'emboîtement élastique (40) qui est agencé sur l'encadrement (22, 24) associé.

2. Article de lunetterie (10) selon la revendication précédente, **caractérisé en ce que** chaque élément d'attraction magnétique (34, 36) est agencé dans une protubérance (42) formée sur le châssis (26, 28) associé.

3. Article de lunetterie (10) selon la revendication précédente, **caractérisé en ce que** chaque protubérance (42) comporte une portion d'extrémité libre (44) parallélépipédique qui s'étend transversalement depuis un bord du châssis (26, 28) associé.

4. Article de lunetterie (10) selon la revendication précédente, **caractérisé en ce que** chaque portion d'extrémité libre (44) comporte un logement (48) ouvert du côté opposé au châssis (26, 28) associé, l'élément d'attraction magnétique (34, 36) associé étant reçu dans ledit logement (48).

5. Article de lunetterie (10) selon l'une quelconque des revendications 2 à 4, **caractérisé en ce que** le pont (20) comporte une échancrure (52) qui est conformée pour recevoir les deux protubérances (42) de manière complémentaire et les retenir sur l'armature (12), ladite échancrure (52) étant ouverte sur une face dite arrière de l'armature (12), de manière à permettre une insertion des protubérances (42) dans l'échancrure (52) par l'arrière de l'armature (12).

6. Article de lunetterie (10) selon la revendication précédente, **caractérisé en ce que** l'échancrure (52) comporte une paroi transversale supérieure (54) et une paroi transversale inférieure (56) qui retiennent les deux protubérances (42) respectivement vers le haut et vers le bas, lorsqu'elles sont montées dans l'échancrure (52).

7. Article de lunetterie (10) selon la revendication 5 ou 6, **caractérisé en ce que** le fond de l'échancrure (52) comporte un évidement (58) qui est délimité transversalement par deux surfaces inclinées (60, 62), et **en ce que** chaque protubérance (42) comporte une portion de surface inclinée (64) complémentaire de la surface inclinée (60, 62) associée de l'évidement (58).

8. Article de lunetterie (10) selon l'une quelconque des revendications précédentes, **caractérisé en ce que** les organes d'emboîtement élastique (38, 40) comportent au moins une nervure (66) et une rainure (68) qui s'étendent le long d'un bord du châssis (26, 28) associé et le long d'un bord de l'encadrement (22, 24) associé.

9. Article de lunetterie (10) selon l'une quelconque des revendications précédentes, **caractérisé en ce que** l'armature (12) comporte à chaque extrémité transversale une mortaise (72) qui est prévue pour recevoir un tenon métallique (74) complémentaire agencé à l'extrémité pivotante d'une branche (14, 16), et **en ce qu'**un organe d'attraction magnétique (80, 82) est reçu dans le fond de la mortaise (72) de manière à retenir le tenon métallique (74) dans la mortaise (72) à la fois en position déployée et en position repliée, chaque branche (14, 16) étant prévue pour pivoter entre sa position déployée et sa position repliée autour d'un axe de pivotement (A1) sensiblement parallèle au plan général de l'armature (12).

10. Article de lunetterie (10) selon la revendication précédente, **caractérisé en ce que** chaque organe d'attraction magnétique (80, 82) comporte une surface principale d'attraction (82) plane et orientée vers le tenon (74), et **en ce que** le tenon métallique (74) associé comporte une surface d'appui primaire (84) qui est en appui plan contre la surface principale d'attraction (82), lorsque la branche (14, 16) associée occupe sa position déployée, et une surface d'appui secondaire (86) qui est inclinée par rapport à la surface d'appui primaire (84) et qui est en appui plan contre la surface principale d'attraction (82), lorsque la branche (14, 16) associée occupe sa position repliée.

11. Article de lunetterie (10) selon la revendication précédente, **caractérisé en ce que** la surface d'appui primaire (84) se prolonge, du côté opposé à la surface d'appui secondaire (86), par une surface cylindrique primaire (88) et/ou la surface d'appui secondaire (86) se prolonge, du côté opposé à la surface d'appui primaire (84), par une surface cylindrique secondaire (90), l'axe de chaque surface cylindrique correspondant à l'axe de pivotement (A1) de la branche (14, 16) associée.
